# EUROPEAN PATENT APPLICATION

(11) **EP 4 456 280 A1**
(43) Date of publication of application: **30.10.2024**
(21) Application number: 22911201.6
(22) Date of filing: 20.12.2022
(51) Int. Cl.: H01M 50/152, H01M 10/04, H01M 50/107, H01M 50/342, H01M 50/545, H01M 50/559

(54) **CYLINDRICAL BATTERY**

(30) Priority: 24.12.2021 JP 2021211656
(71) Applicant: Panasonic Energy Co., Ltd., Osaka 570-8511 (JP)
(72) Inventor: YAMASHITA, Keisuke, Kadoma-shi, Osaka 571-0057 (JP)
(74) Representative: Eisenführ Speiser
(86) International application number: PCT/JP2022/046776
(87) International publication number: WO 2023/120499

(57) **Abstract**

A cylindrical battery (10) includes: an electrode body (14) in which a positive electrode (11) and a negative electrode (12) are wound with a separator (13) therebetween; a bottomed cylindrical external can (16) that accommodates the electrode body (14); and a sealing body (17) that is fixed by press-fitting at an opening of the external can (16) via a gasket (28). The external can (16) has a thin-walled easily breakable section (70) on a bottom part (68), and the sealing body (17) has a terminal cap (27) for sealing the opening of the external can (16). The terminal cap (27) has an inclined section (27a) that is inclined so as to come close to the bottom part (68) as the distance to an outer side in the radial direction decreases, and a top section (27b) that is connected to an inner edge of the inclined section (27a). At least a portion of the top section (27b) is opposed to a hollow portion (14a) of the electrode body (14) in the axial direction.

## Description

### TECHNICAL FIELD

The present disclosure generally relates to a cylindrical battery.

### BACKGROUND ART

Among conventional cylindrical batteries, there is a cylindrical battery disclosed in PATENT LITERATURE 1. The cylindrical battery comprises an electrode assembly, a bottomed cylindrical exterior housing can that houses the electrode assembly, and a sealing assembly with which an opening of the exterior housing can is capped. The sealing assembly has a terminal cap having a vent hole, a terminal plate having a gas vent hole, and a first safety vent that is interposed between the terminal cap and the terminal plate and seals the inside of the battery. The bottom portion of the exterior housing can is provided with a second safety vent. The second safety vent operates when a thin easy rupture portion provided in the bottom portion of the exterior housing can ruptures. Since it is difficult to provide a large gas vent hole in the sealing assembly, the first safety vent and the second safety vent are provided to increase the capacity of releasing gas generated in the battery.

### CITATION LIST

### PATENT LITERATURE

PATENT LITERATURE 1: Japanese Unexamined Patent Application Publication No. Hei6-333548

### SUMMARY

### TECHNICAL PROBLEM

However, in the above-described cylindrical battery, the safety vent in the bottom portion of the exterior housing can may fail to operate smoothly after the safety vent in the sealing assembly has ruptured due to stagnation of gas that has flowed out of an end face on the sealing assembly side of the electrode assembly in corners of each member constituting the sealing assembly or a gap between the members. Therefore, even when a safety vent having a large gas release area is provided in the bottom portion of the exterior housing can, the capacity of releasing gas generated in the battery cannot be increased sufficiently. It is an advantage of the present disclosure to provide a cylindrical battery in which a safety vent provided in a bottom portion of an exterior housing can operates smoothly.

### SOLUTION TO PROBLEM

In order to solve the above-described problem, a cylindrical battery according to the present disclosure comprises an electrode assembly in which a positive electrode and a negative electrode are wound with a separator interposed between the positive electrode and the negative electrode, a bottomed cylindrical exterior housing can that houses the electrode assembly, and a sealing assembly that is fixed by caulking to an opening of the exterior housing can with a gasket interposed between the sealing assembly and the opening, wherein the exterior housing can has a thin easy rupture portion in a bottom portion, the sealing assembly has an inclined portion that is inclined so that a terminal cap with which the opening of the exterior housing can is capped approaches a bottom portion side toward a radial outer side, and a top portion that connects with an inner edge of the inclined portion, and at least a portion of the top portion faces a hollow of the electrode assembly in an axial direction.

The above-described terminal cap seals an opening of the exterior housing can and has no gas vent hole for releasing gas. It is assumed that a requirement that at least a portion of the top portion faces the hollow of the electrode assembly in the axial direction is satisfied when constituent members of the battery except for leads connected to the electrode assembly are not present axially between at least a portion of the top portion and the hollow of the electrode assembly.

### ADVANTAGEOUS EFFECTS OF INVENTION

According to the cylindrical battery of the present disclosure, since gas that has flowed out of an end surface on the sealing assembly side of the electrode assembly toward the terminal cap side can be smoothly guided to a radial center side so as to be along an inner surface of the inclined portion, the gas that has flowed out of the end surface on the sealing assembly side of the electrode assembly can be smoothly guided to the bottom portion side of the exterior housing can via the hollow of the electrode assembly. Accordingly, the cylindrical battery can be achieved in which a safety vent provided in a bottom portion of an exterior housing can operates smoothly to provide excellent safety.

### BRIEF DESCRIPTION OF DRAWING

FIG. 1 is an axial sectional view of a cylindrical battery according to an embodiment of the present disclosure.
FIG. 2 is a perspective view of an electrode assembly of the cylindrical battery.
FIG. 3 is an axial expanded sectional view of an upper side of a cylindrical battery of a reference example.
FIG. 4 is an axial expanded sectional view of an upper side of the cylindrical battery of the above-described embodiment.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments and modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a cylindrical battery 10 is defined as "upper", and a bottom portion 68 side of an exterior housing can 16 in the axial direction is defined as "lower". Of the components described below, components that are not described in the independent claim indicating the highest level concept are arbitrary components, and are not essential components.

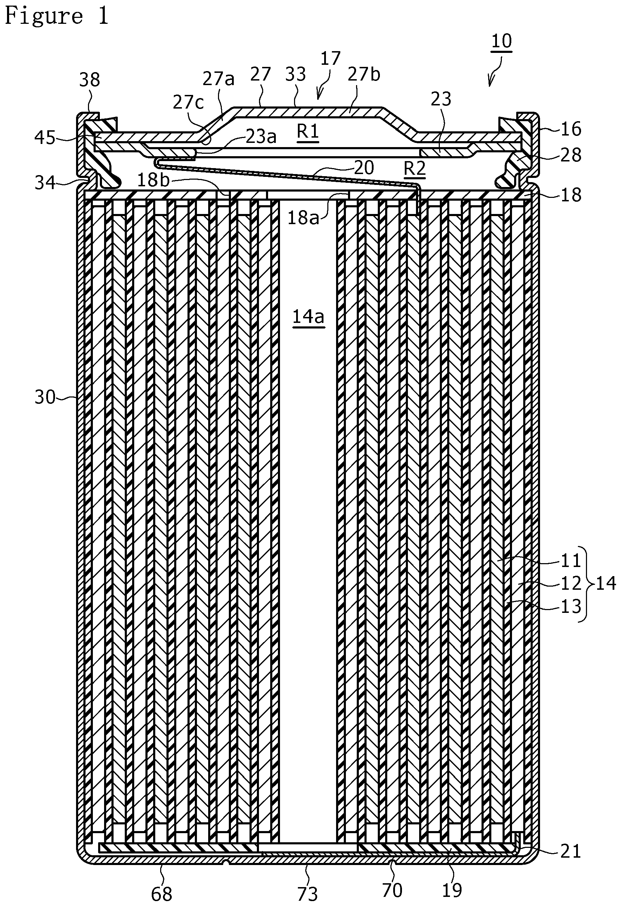

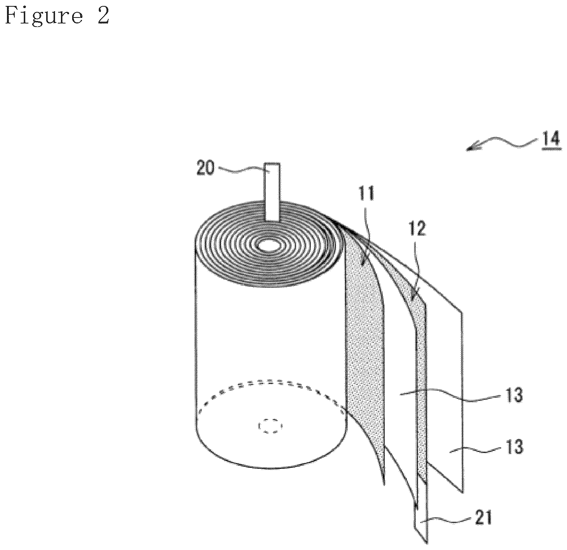

FIG. 1 is an axial sectional view of the cylindrical battery 10 according to an embodiment of the present disclosure, and FIG. 2 is a perspective view of an electrode assembly 14 of the cylindrical battery 10. As illustrated in FIG. 1, the cylindrical battery (hereinafter, simply referred to as a battery) 10 comprises a wound-type electrode assembly 14, a non-aqueous electrolyte (not illustrated), a bottomed cylindrical metal exterior housing can 16 that houses the electrode assembly 14 and the non-aqueous electrolyte, and a sealing assembly 17 with which an opening of the exterior housing can 16 is capped. As illustrated in FIG. 2, the electrode assembly 14 has a wound structure in which an elongated positive electrode 11 and an elongated negative electrode 12 are wound with two elongated separators 13 each interposed between the positive electrode 11 and the negative electrode 12.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween. The negative electrode 12 may include a winding start end of the electrode assembly 14. However, the separator 13 generally extends beyond a winding start side end of the negative electrode 12, and a winding start side end of the separator 13 serves as the winding start end of the electrode assembly 14.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the positive electrode current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the negative electrode current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13.

As illustrated in FIG. 1, a positive electrode lead 20 is bonded to the positive electrode 11, and a negative electrode lead 21 is bonded on a winding finish-side in the longitudinal direction of the negative electrode 12. The battery 10 has an upper insulating plate 18 above the electrode assembly 14, and has a lower insulating plate 19 below the electrode assembly 14. The positive electrode lead 20 extends toward the sealing assembly 17 through a through hole of the upper insulating plate 18, and the negative electrode lead 21 extends toward a bottom portion 68 of the exterior housing can 16 through the outside of the lower insulating plate 19. The positive electrode lead 20 is connected to a lower surface of a terminal plate 23 of the sealing assembly 17, by means of welding or the like. A terminal cap 27 constituting a top plate of the sealing assembly 17 is electrically connected to the terminal plate 23, and serves as a positive electrode terminal. The negative electrode lead 21 is connected to an inner surface of the bottom portion 68 of the metal exterior housing can 16 by means of welding or the like, and the exterior housing can 16 serves as a negative electrode terminal.

In the example illustrated in FIGS. 1 and 2, the positive electrode lead 20 is electrically connected to an intermediate portion such as a center portion in the winding direction of the positive electrode current collector, and the negative electrode lead 21 is electrically connected to a winding finish-side end in the winding direction of the negative electrode current collector. However, in another structure, the positive electrode may be electrically connected to the terminal cap. Specifically, one-side ends of a plurality of positive electrode leads may be joined to the positive electrode current collector at intervals in a winding direction thereof, and the other-side ends of the plurality of positive electrode leads may be joined to the terminal plate electrically connected to the terminal cap. Alternatively, an upper end in the width direction in the positive electrode current collector may extend upward so that the extended upper end is joined to a current collector plate electrically connected to the terminal cap by means of welding or the like.

Additionally, the negative electrode lead may be electrically connected to a winding start-side end in the winding direction of the negative electrode current collector. Alternatively, the electrode assembly may have two negative electrode leads in which one of the negative electrode leads is electrically connected to the winding start side-end in the winding direction of the negative electrode current collector, and the other negative electrode lead is electrically connected to the winding finish-side end in the winding direction of the negative electrode current collector. Alternatively, the winding finish-side end in the winding direction of the negative electrode current collector may be brought into contact with an inner surface of the exterior housing can so that the negative electrode and the exterior housing can are electrically connected to each other. Alternatively, a lower end in the width direction in the negative electrode current collector may extend so that the extended lower end is j oined to a current collector plate electrically connected to the bottom portion of the exterior housing can by means of welding or the like.

The cylindrical battery 10 further comprises a gasket 28 disposed between the exterior housing can 16 and the sealing assembly 17. The gasket 28 is made of materials having insulation, which, for example, include resin. The sealing assembly 17 is fixed by caulking to the opening of the exterior housing can 16 with the gasket 28 interposed therebetween. In this way, the battery 10 is closed. The gasket 28 is held between the exterior housing can 16 and the sealing assembly 17, and insulates the sealing assembly 17 from the exterior housing can 16. The gasket 28 has a role of a seal material for maintaining the airtightness of the inside of the battery, and a role as an insulating material for insulating the sealing assembly 17 from the exterior housing can 16.

The exterior housing can 16 houses the electrode assembly 14 and the non-aqueous electrolyte, and has a shoulder 38, a grooved portion 34, a cylindrical portion 30, and a bottom portion 68. The grooved portion 34 can be formed by, for example, annularly recessing the one part of the side wall of the exterior housing can 16 toward the radially inward side by a radially inward spinning process. The shoulder 38 is formed by bending an upper end of the exterior housing can 16 to the inner side toward a circumferential edge 45 of the sealing assembly 17 when the sealing assembly 17 is fixed by caulking to the exterior housing can 16.

The sealing assembly 17 has a stacked structure of the terminal plate 23, and the terminal cap 27. The terminal plate 23 and the terminal cap 27 are axially held by the gasket 28 by means of the above-described caulking, and are electrically connected to each other. The sealing assembly 17 has no safety vent, and the terminal cap 27 having no gas vent hole has a mechanism in which the opening of the exterior housing can 16 is capped with the terminal cap 27. The terminal cap 27 has an inclined portion 27a that is inclined so as to approach the bottom portion 68 side toward the radial outer side, and a top portion 27b that connects with an inner edge of the inclined portion 27a. The inclined portion 27a may have at least an inner surface that is inclined as described above. The top portion 27b is flat and extends in the radial direction.

A hollow 14a of the electrode assembly 14 is located on the radially inward side with respect to an outer edge of the circular top portion 27b. The positive electrode lead 20 extends from the electrode assembly 14 to the terminal plate 23 while passing over the hollow 14a. Only the positive electrode lead 20 is present axially between at least a portion of the top portion 27b and the hollow 14a, and at least a portion of the top portion 27b faces the hollow 14a of the electrode assembly 14 in the axial direction. The terminal plate 23 is annular, and has a through hole 23a at a radial center. The terminal plate 23 is located on the radially outward side with respect to a lower end 27c of the inclined portion 27a. In this specification, when the top portion of the terminal cap is viewed from the lower side of the sealing assembly in the axial direction, and when the entirety of the inclined portion and the top portion is visible, it is expressed that the inclined portion and the top portion are exposed to an internal space of the battery. That is, a region R1 surrounded by a projection 33 including the inclined portion 27a and the top portion 27b of the terminal cap 27 is exposed to an internal space R2 of the battery 10.

The upper insulating plate 18 is annular, and has a first through hole 18a at the radial center. The entirety of the hollow 14a overlaps the first through hole 18a in the axial direction. The upper insulating plate 18 may have one or more second through holes 18b on the radially outer side with respect to the first through hole 18a, and the one or more second through holes 18b preferably faces the inclined portion 27a in the axial direction.

The bottom portion 68 has a thin easy rupture portion 70, and the thin easy rupture portion 70 is formed by a groove having a circular shape in a plan view when seen from a lower side in the axial direction. In the bottom portion 68, a portion surrounded by the circular easy rupture portion 70 forms a safety vent 73. The battery 10 has the safety vent 73 in only the bottom portion 68 of the exterior housing can 16. The entirety of the hollow 14a of the electrode assembly 14 is located on the radially inward side with respect to the easy rupture portion 70.

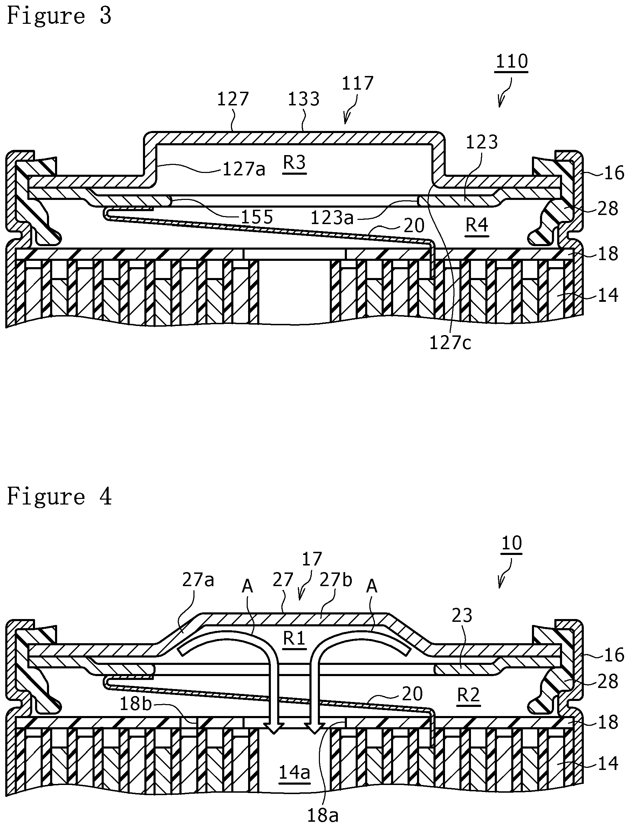

FIG. 3 is an axial expanded sectional view of an upper side of a cylindrical battery 110 of a reference example, and FIG. 4 is an axial expanded sectional view of an upper side of the cylindrical battery 10. As illustrated in FIG. 3, the cylindrical battery (hereinafter, simply referred to as a battery) 110 comprises a terminal cap 127 that has a projection 133 defining an approximately columnar region R3 and has no gas vent hole, and an annular terminal plate 123. An end 123a on the radially inward side of the annular terminal plate 123 projects toward the radially inward side with respect to a lower end 127c of a cylindrical inner circumferential surface 127a of the projection 133. Therefore, in the battery 110, the entirety of the region R3 is not exposed to an internal space R4 in the cylindrical battery 10.

Referring to FIG. 3, if abnormal heat generation has occurred in the battery 110 and gas has flowed out of an end surface on an upper side of the electrode assembly 14, the gas that has flowed out and filled the region R3 easily stagnates in the region R3. Therefore, the safety vent provided in the bottom portion may fail to operate smoothly due to stagnation of the gas.

In contrast, as illustrated in FIG. 4, according to the battery 10, since the terminal cap 27 has the inclined portion 27a and the top portion 27b that faces the hollow 14a of the electrode assembly 14 in the axial direction, the gas that has flowed out of the end surface on the upper side of the electrode assembly 14 is smoothly guided to the hollow 14a of the electrode assembly 14 as indicated by an arrow A in FIG. 4. This can suppress stagnation of the gas in the region R1. In addition, since the region R1 defined by the inclined portion 27a and the top portion 27b is exposed to the internal space R2, the above-described effect is more remarkable.

Accordingly, since the gas that flows out of the end surface on the lower side of the electrode assembly 14 as well as the gas that flows out of the end surface on the upper side of the electrode assembly 14 is smoothly guided to the safety vent 73 in the bottom portion 68 at the time of occurrence of the abnormal heat generation in the battery 10, the safety vent 73 operates smoothly. Therefore, the desired gas release can be achieved at the time of occurrence of the abnormal heat generation in the battery 10.

The upper insulating plate 18 may have one or more second through holes 18b on the radially outer side with respect to the first through hole 18a, and the one or more second through holes 18b preferably faces the inclined portion 27a in the axial direction. According to this configuration, the gas generated in the electrode assembly 14 can be smoothly guided to the upper side via the one or more second through holes 18b, and, in particular, the gas that has passed through the second through holes 18b is easily guided to the inclined portion 27a. Accordingly, the gas that flows out of the end surface on the upper side of the electrode assembly 14 can be guided more smoothly to the safety vent 73 via the hollow 14a of the electrode assembly 14.

The present disclosure is not limited to the above embodiment and modified examples thereof, and various improvements and changes are possible within the matters described in the claims of the present application and the scope of equivalence of claims.

For example, in the above-described embodiment, a case has been described where the upper end of the positive electrode lead 20 is joined to the terminal plate 23 electrically connected to the terminal cap 27. However, the terminal plate may not be provided so that the upper end of the positive electrode lead can be directly joined to the terminal cap.

Furthermore, a case has been described where the top portion 27b is flat and extends in the radial direction. However, the top portion of the terminal cap may have a downward projecting shape in the vicinity of the radial center. Thus, the gas that has flowed to the radial inward side so as to be along the inclined portion can be guided more smoothly to the hollow of the electrode assembly along the top portion.

Furthermore, a case has been described where the easy rupture portion 70 formed by a groove having a circular shape in a plan view is provided in the bottom portion 68 of the exterior housing can 16. However, an easy rupture portion having any shape that enables formation of a safety vent may be provided in the bottom portion of the exterior housing can. For example, the easy rupture portion formed by a groove having a C shape in a plan view may be provided in the bottom portion of the exterior housing can. Alternatively, an easy rupture portion formed by a groove having a polygonal shape in a plan view and a linear groove extending outward from each of a plurality of vertexes of the groove having the polygonal shape may be provided in the bottom portion of the exterior housing can.

### REFERENCE SIGNS LIST

10 Cylindrical battery, 11 Positive electrode, 12 Negative electrode, 13 Separator, 14 Electrode assembly, 14a Hollow, 16 Exterior housing can, 17 Sealing assembly, 18 Upper insulating plate, 18a First through hole, 18b Second through hole, 19 Lower insulating plate, 20 Positive electrode lead, 21 Negative electrode lead, 23 Terminal plate, 23a Through hole, 27 Terminal cap, 27a Inclined portion, 27b Top portion 28 Gasket, 30 Cylindrical portion, 33 Projection, 68 Bottom portion, 70 Easy rupture portion, 73 Safety vent, R1 Region, R2 Internal space

## Claims

1. A cylindrical battery, comprising:
an electrode assembly in which a positive electrode and a negative electrode are wound with a separator interposed between the positive electrode and the negative electrode;
a bottomed cylindrical exterior housing can that houses the electrode assembly; and
a sealing assembly that is fixed by caulking to an opening of the exterior housing can with a gasket interposed between the sealing assembly and the opening,
wherein the exterior housing can has a thin easy rupture portion in a bottom portion,
the sealing assembly has a terminal cap with which an opening of the exterior housing can is capped, and
the terminal cap has an inclined portion that is inclined so that the terminal cap approaches a bottom portion side toward a radial outer side, and a top portion that connects with an inner edge of the inclined portion, and
at least a portion of the top portion faces a hollow of the electrode assembly in an axial direction.

2. The cylindrical battery according to claim 1, wherein
the inclined portion and the top portion are exposed to an internal space.

3. The cylindrical battery according to claim 1 or 2, wherein
the easy rupture portion is formed by a groove having a circular shape or a C shape.

4. The cylindrical battery according to claim 1 or 2, wherein
the easy rupture portion is formed by a groove having a polygonal shape and a linear groove extending outward from each of a plurality of vertexes of the groove having the polygonal shape.
